# EUROPEAN PATENT APPLICATION

(11) **EP 2 421 025 A1**
(43) Date of publication of application: **22.02.2012**
(21) Application number: 10764392.6
(22) Date of filing: 08.04.2010
(51) Int. Cl.: H01L 21/02, G05B 19/418

(54) **METHOD AND SYSTEM FOR MANUFACTURING PRODUCT**

(30) Priority: 15.04.2009 JP 2009099081
(71) Applicant: Sharp Kabushiki Kaisha, Osaka-shi, Osaka 545-8522 (JP)
(72) Inventor: YOKOGAWA, Masahiro, Osaka 545-8522 (JP)
(74) Representative: Müller - Hoffmann & Partner
(86) International application number: PCT/JP2010/056374
(87) International publication number: WO 2010/119808

(57) **Abstract**

Manufacturing conditions are saved in a first storage unit (11). The manufacturing conditions are transmitted from the first storage unit (11) to a second storage unit (21) to be stored in the second storage unit (21). A product is manufactured based on the manufacturing conditions stored in the second storage unit (21). After the product is manufactured, the manufacturing conditions are erased from the second storage unit (21). Thus, maintenance and inspection can be easily performed, and leak of information about the manufacturing conditions can be prevented.

## Description

### TECHNICAL FIELD

The present invention relates to a manufacturing method and a manufacturing system for a product, and particularly to a manufacturing method and a manufacturing system for a product which use a storage unit storing manufacturing conditions.

### BACKGROUND ART

Some manufacturing devices for manufacturing products have a storage unit storing manufacturing conditions.

For example, in a technique described in Japanese Patent Laying-Open No. 4-99279 (Patent Literature 1), a supply device has a microcomputer. The microcomputer stores a heating output pattern of a heater and an output pattern of a carrier gas.

### CITATION LIST

### PATENT LITERATURE

PTL 1: Japanese Patent Laying-Open No. 4-99279

### SUMMARY OF INVENTION

### TECHNICAL PROBLEM

In many cases, a place where a manufacturing device as the supply device described in the above publication is installed is not a place where entry of people is severely restricted in terms of information management (hereinafter referred to as a "controlled area"). Therefore, there is a problem that leak of information about manufacturing conditions stored in a manufacturing system is likely to occur.

On the other hand, if the entire manufacturing system is installed in the controlled area, leak of information can be prevented, but entry of an operator who will perform maintenance and inspection of the manufacturing system is restricted, making it difficult to perform maintenance and inspection.

Accordingly, one object of the present invention is to provide a manufacturing method and a manufacturing system for which maintenance and inspection can be easily performed and leak of information about manufacturing conditions can be prevented.

### SOLUTION TO PROBLEM

A manufacturing method for a product in accordance with the present invention includes the steps described below.

Manufacturing conditions are saved in a first storage unit. The manufacturing conditions are transmitted from the first storage unit to a second storage unit to be stored in the second storage unit. The product is manufactured based on the manufacturing conditions stored in the second storage unit. The manufacturing conditions are erased from the second storage unit after the product is manufactured.

According to the manufacturing method for the product in accordance with the present invention, the manufacturing conditions are erased from the second storage unit after the product is manufactured. This can prevent leak of information about the manufacturing conditions. Further, since the second storage unit is installed in a place outside a controlled area, an operator who will perform maintenance and inspection of a manufacturing system can access the second storage unit. Thereby, the operator can easily perform the maintenance and inspection of the manufacturing system.

Preferably, in the manufacturing method described above, the second storage unit is volatile.

Thereby, information stored in the second storage unit is erased when power is turned off. Therefore, leak of the manufacturing conditions from the second storage unit can be prevented more reliably.

Preferably, in the manufacturing method described above, the first storage unit is nonvolatile.

Thereby, the first storage unit can continue saving the manufacturing conditions even if power is turned off.

Preferably, in the manufacturing method described above, the manufacturing conditions are not stored in a nonvolatile manner outside the first storage unit.

Thereby, when power is turned off, the manufacturing conditions are erased outside the first storage unit. Accordingly, leak of the manufacturing conditions from outside the first storage unit can be prevented more reliably.

Preferably, in the manufacturing method described above, a signal requesting transmission of the manufacturing conditions from the first storage unit to the second storage unit is generated after the manufacturing conditions are erased.

Thereby, the manufacturing conditions are stored again in the second storage unit, and thus a product can be manufactured again. Namely, manufacturing of a product can be repeated.

Preferably, in the manufacturing method described above, a product is manufactured by each of a plurality of processing units. Further, the above signal includes information specifying any of the plurality of processing units.

Thereby, any of the plurality of processing units can be specified, and manufacturing conditions suitable for the specific processing unit can be selectively transmitted.

A manufacturing system in accordance with the present invention includes a manufacturing device, a saving device, and a control device. The manufacturing device manufactures a product. The saving device has a first storage unit saving manufacturing conditions for controlling the manufacturing device, and can transmit the manufacturing conditions saved in the first storage unit. The control device has a second storage unit storing the manufacturing conditions transmitted from the saving device, and a control unit controlling the manufacturing device based on the manufacturing conditions stored in the second storage unit. The control unit is configured to erase the manufacturing conditions from the second storage unit after controlling the manufacturing device based on the manufacturing conditions stored in the second storage unit.

According to the manufacturing system in accordance with the present invention, the control unit erases the manufacturing conditions from the second storage unit after controlling the manufacturing device based on the manufacturing conditions stored in the second storage unit. This can prevent leak of information about the manufacturing conditions. Further, since the second storage unit is installed in a place outside a controlled area, an operator who will perform maintenance and inspection of the manufacturing system can access the second storage unit. Thereby, the operator can easily perform the maintenance and inspection of the manufacturing system.

Preferably, in the manufacturing system described above, the saving device is installed in a first area, and the control device and the manufacturing device are installed in a second area different from the first area. More preferably, entry of people into the first area is restricted in terms of information management, when compared with the second area.

Preferably, in the manufacturing system described above, the second storage unit is volatile.

Thereby, information stored in the second storage unit is erased when power is turned off. Therefore, leak of the manufacturing conditions from the second storage unit can be prevented more reliably.

Preferably, in the manufacturing system described above, the first storage unit is nonvolatile.

Thereby, the first storage unit can continue saving the manufacturing conditions even if power is turned off.

Preferably, the manufacturing system described above is configured such that the manufacturing conditions are not stored in a nonvolatile manner outside the first storage unit.

Thereby, when power is turned off, the manufacturing conditions are erased outside the first storage unit. Accordingly, leak of the manufacturing conditions from outside the first storage unit can be prevented more reliably.

Preferably, in the manufacturing system described above, the control unit is configured to be capable of generating a signal requesting transmission of the manufacturing conditions from the first storage unit to the second storage unit.

Thereby, when the manufacturing conditions are not stored in the second storage unit, the control unit allows the manufacturing conditions to be stored in the second storage unit by generating the above signal.

Preferably, in the manufacturing system described above, the manufacturing device includes a plurality of processing units each manufacturing a product. Further, the above signal includes information specifying any of the plurality of processing units.

Thereby, any of the plurality of processing units can be specified, and manufacturing conditions suitable for the specific processing unit can be selectively transmitted.

### ADVANTAGEOUS EFFECTS OF INVENTION

As described above, according to the present invention, leak of information about the manufacturing conditions can be prevented. Further, maintenance and inspection of the manufacturing system can be easily performed.

### BRIEF DESCRIPTION OF DRAWINGS

Fig. 1 is a block diagram schematically showing a configuration of a manufacturing system in accordance with Embodiment 1 of the present invention.
Fig. 2 is a flowchart illustrating a manufacturing method for a product in accordance with Embodiment 1 of the present invention.
Fig. 3 is a block diagram schematically showing a configuration of a manufacturing system in accordance with Embodiment 2 of the present invention.
Fig. 4 is a layout diagram schematically showing a configuration of the manufacturing system in accordance with Embodiment 2 of the present invention.
Fig 5 is a layout diagram schematically showing a first step of a manufacturing method for a product in accordance with Embodiment 2 of the present invention.
Fig. 6 is a layout diagram schematically showing a second step of the manufacturing method for a product in accordance with Embodiment 2 of the present invention.
Fig. 7 is a layout diagram schematically showing a third step of the manufacturing method for a product in accordance with Embodiment 2 of the present invention.
Fig. 8 is a layout diagram schematically showing a fourth step of the manufacturing method for a product in accordance with Embodiment 2 of the present invention.

### DESCRIPTION OF EMBODIMENTS

Hereinafter, embodiments of the present invention will be described with reference to the drawings.

### (Embodiment 1)

Firstly, a manufacturing system in accordance with the present embodiment will be described.

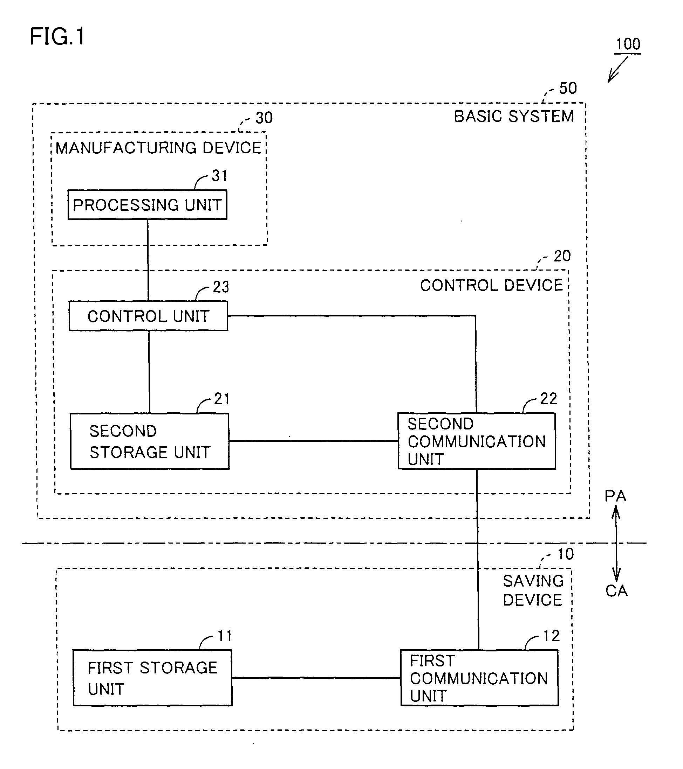

Referring to Fig. 1, a manufacturing system 100 in accordance with the present embodiment has a saving device 10 and a basic system 50. Saving device 10 is installed in a controlled area CA (a first area). Basic system 50 is installed in a processing area PA (a second area) where entry of people is not restricted in terms of information management, when compared with controlled area CA. Basic system 50 has a control device 20 and a manufacturing device 30.

Manufacturing device 30 has a processing unit 31 manufacturing a product. The product used herein includes an unfinished product in the course of a manufacturing process. Manufacturing device 30 is, for example, a chemical vapor deposition (CVD) device having one film formation chamber, and in this case, processing unit 31 includes a film formation chamber and an internal structure thereof.

Saving device 10 has a first storage unit 11 and a first communication unit 12. The first storage unit 11 is provided to save manufacturing conditions for controlling manufacturing device 30, and is preferably a nonvolatile storage device such as a hard disk drive (HDD) or a flash memory. The first communication unit 12 can transmit the manufacturing conditions saved in the first storage unit 11, in accordance with an external signal. Saving device 10 is implemented by, for example, a personal computer (PC).

Control device 20 has a second storage unit 21, a second communication unit 22, and a control unit 23. Control device 20 is implemented by, for example, a PC or a programmable logic controller (PLC).

The second storage unit 21 is provided to store the manufacturing conditions transmitted from the first communication unit 12 of saving device 10, and is preferably a volatile storage device such as a random access memory (RAM). The second communication unit 22 is connected to each of the first communication unit 12, the second storage unit 21, and control unit 23.

Control unit 23 is provided to control manufacturing device 30 based on the manufacturing conditions stored in the second storage unit 21. Control unit 23 is also configured to erase the manufacturing conditions from the second storage unit 21 after controlling manufacturing device 30 based on the manufacturing conditions stored in the second storage unit 21. Further, control unit 23 is configured to be capable of generating a signal requesting transmission of the manufacturing conditions from the first storage unit 11 to the second storage unit 21.

Preferably, manufacturing system 100 is configured such that the manufacturing conditions are not stored in a nonvolatile manner outside the first storage unit 11.

Next, a method of manufacturing a product using manufacturing system 100 will be described.

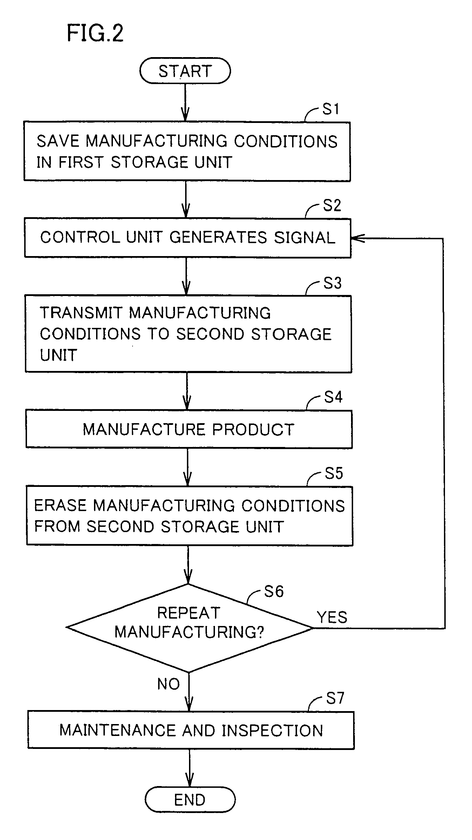

Referring to Figs. 1 and 2, in step S1, the manufacturing conditions are saved in the first storage unit 11 in controlled area CA.

In step S2, control unit 23 generates a signal requesting transmission of the manufacturing conditions from the first storage unit 11 to the second storage unit 21. This signal is transmitted to the first communication unit 12 via the second communication unit 22.

In step S3, the first communication unit 12 that has received the above signal transmits the manufacturing conditions saved in the first storage unit 11 to the second communication unit 22. The second communication unit 22 receives the manufacturing conditions transmitted from the first communication unit 12, and subsequently transmits the received manufacturing conditions to the second storage unit 21. The second storage unit 21 stores the manufacturing conditions transmitted from the second communication unit 22. Thus, the manufacturing conditions are transmitted from the first storage unit 11 to the second storage unit 21, and stored in the second storage unit 21.

In step S4, control unit 23 controls processing unit 31 of manufacturing device 30 based on the manufacturing conditions stored in the second storage unit 21. Thereby, manufacturing device 30 manufactures a product. Specifically, film formation is performed by a CVD device based on film formation conditions defining, for example, power, a gas flow rate, film formation time, and the like.

In step S5, after the product is manufactured as described above, control unit 23 erases the manufacturing conditions from the second storage unit 21.

In step S6, control unit 23 determines whether or not to repeat manufacturing. For example, if the number of manufactured products does not reach a scheduled number set beforehand in control unit 23, control unit 23 determines to repeat manufacturing, and if the number of manufactured products reaches the scheduled number, control unit 23 determines not to repeat manufacturing.

If control unit 23 determines to repeat manufacturing in step S6, the process returns to step S2.

In contrast, if control unit 23 determines not to repeat manufacturing in step S6, maintenance and inspection of basic system 50 are performed in step S7. During the maintenance and inspection, an operator stores conditions for the maintenance and inspection in the second storage unit 21 in processing area PA, and thereby the operator can operate manufacturing device 30 using control device 20.

According to the present embodiment, control unit 23 controls manufacturing device 30 based on the manufacturing conditions stored in the second storage unit 21, and thereafter erases the manufacturing conditions from the second storage unit 21. This can prevent leak of information about the manufacturing conditions.

Further, since control device 20 having the second storage unit 21 is installed in processing area PA, that is, a place outside controlled area CA, the operator who will perform the maintenance and inspection of basic system 50 can access the second storage unit 21. Thereby, the operator can perform the maintenance and inspection involving operation of manufacturing device 30 using control device 20.

Further, since the second storage unit 21 is volatile, information stored in the second storage unit 21 is erased when power is turned off. Therefore, leak of the manufacturing conditions from the second storage unit 21 can be prevented more reliably.

Furthermore, since the first storage unit 11 is nonvolatile, the first storage unit 11 can continue saving the manufacturing conditions even if power is turned off.

Preferably, manufacturing system 100 is configured such that the manufacturing conditions are not stored in a nonvolatile manner outside the first storage unit 11. Thereby, when power is turned off, the manufacturing conditions are erased outside the first storage unit 11. Accordingly, the manufacturing conditions remain only in the first storage unit 11 located in controlled area CA, and thus leak of the manufacturing conditions can be prevented more reliably.

In addition, control unit 23 is configured to be capable of generating a signal requesting transmission of the manufacturing conditions from the first storage unit 11 to the second storage unit 21, after erasing the manufacturing conditions. Thereby, the manufacturing conditions are stored again in the second storage unit 21, and thus a product can be manufactured again. Namely, manufacturing of a product can be repeated.

### (Embodiment 2)

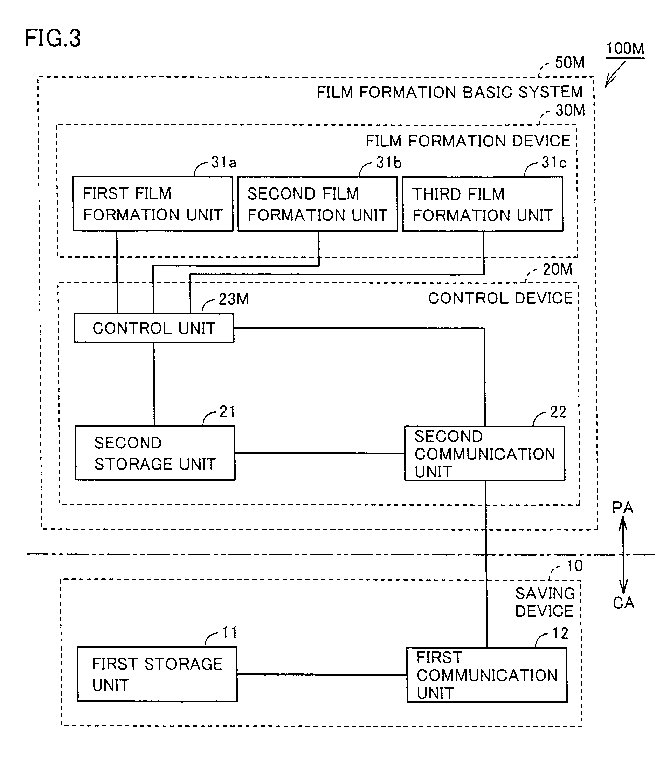

Referring to Fig. 3, a film formation system 100M (manufacturing system) in accordance with the present embodiment has saving device 10 and a film formation basic system 50M. Film formation basic system 50M is installed in processing area PA, and has a control device 20M and a film formation device 30M (manufacturing device).

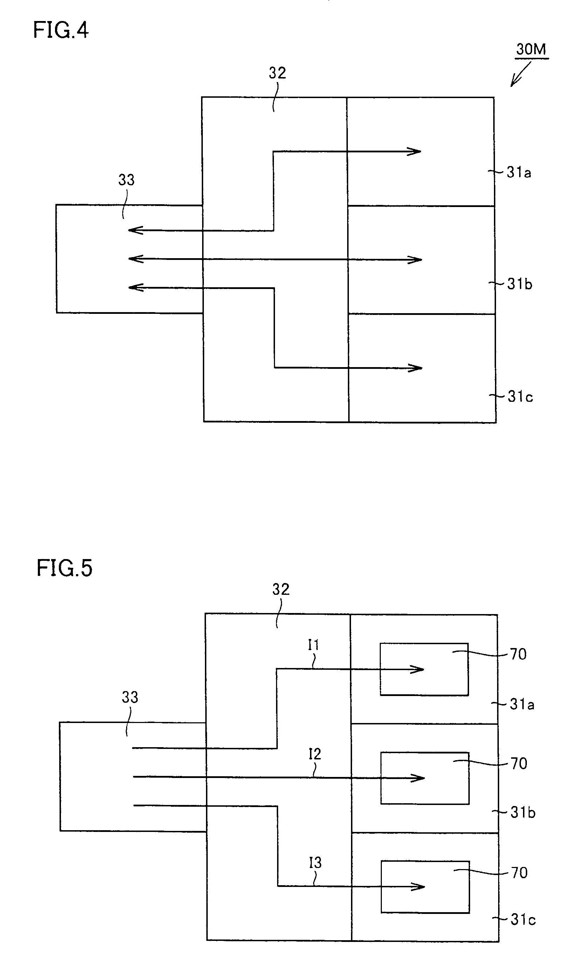

Referring to Fig. 4, film formation device 30M has first to third film formation units 31a to 31c (a plurality of processing units), a transport unit 32, and a front chamber 33. Each of the first to third film formation units 31a to 31c includes a film formation chamber and an internal structure thereof, and can manufacture a film-formed substrate (product) by forming a film on a substrate. Transport unit 32 is provided to transport substrates between each of the first to third film formation units 31a to 31c and front chamber 33, as indicated by arrows in Fig. 4.

Referring to Fig. 3, control device 20M has the second storage unit 21, the second communication unit 22, and a control unit 23M. Control unit 23M is provided to control film formation device 30M based on film formation conditions (manufacturing conditions) stored in the second storage unit 21. Control unit 23M is also configured to erase the film formation conditions from the second storage unit 21 after controlling film formation device 30M based on the film formation conditions stored in the second storage unit 21. Further, control unit 23M is configured to be capable of generating a signal requesting transmission of the film formation conditions from the first storage unit 11 to the second storage unit 21. This signal includes information specifying any of the first to third film formation units 31a to 31 c. Control device 20M is implemented by, for example, a PC or a PLC.

Preferably, film formation system 100M is configured such that the film formation conditions are not stored in a nonvolatile manner outside the first storage unit 11.

It is to be noted that; other than the foregoing, the configuration of Embodiment 2 is substantially identical to the configuration of Embodiment 1 described above, and thus identical or corresponding elements will be designated by the same reference numerals, and the description thereof will not be repeated.

Next, a method of forming a film using film formation system 100M will be described.

Referring to Fig. 3, firstly, first to third film formation conditions for the first to third film formation units 31a to 31c, respectively, are saved in the first storage unit 11 in controlled area CA (Fig. 2: step S1).

Referring to Figs. 3 and 5, substrates 70 are transported from front chamber 33 to each of the first to third film formation units 31a to 31c via transport unit 32 (arrows I1 to I3 in Fig. 5). Further, control unit 23M generates a signal requesting transmission of the first to third film formation conditions from the first storage unit 11 to the second storage unit 21 (Fig. 2: step S2). This signal is transmitted to the first communication unit 12 via the second communication unit 22.

The first communication unit 12 that has received the above signal transmits the first to third film formation conditions saved in the first storage unit 11 to the second communication unit 22. The second communication unit 22 receives the first to third film formation conditions transmitted from the first communication unit 12, and subsequently transmits the received film formation conditions to the second storage unit 21. The second storage unit 21 stores the first to third film formation conditions transmitted from the second communication unit 22. Thus, the first to third film formation conditions are transmitted from the first storage unit 11 to the second storage unit 21, and stored in the second storage unit 21 (Fig. 2: step S3).

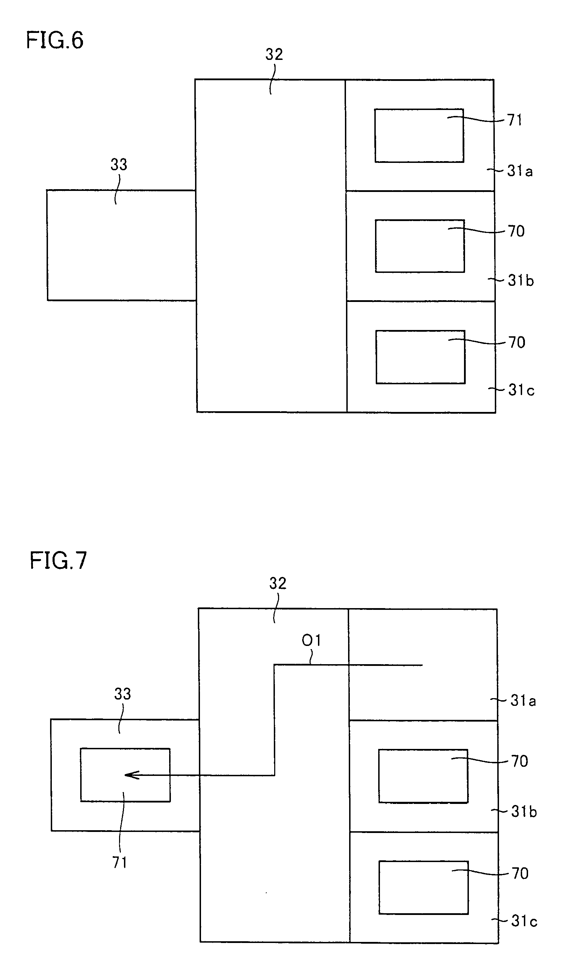

Referring to Figs. 3 and 6, control unit 23M controls the first to third film formation units 31a to 31c of film formation device 30M based on the respective first to third film formation conditions stored in the second storage unit 21. Thereby, film formation device 30M performs film formation (Fig. 2: step S4). A time point when film formation is finished is not necessarily identical among the first to third film formation units 31a to 31c, and for example, at a time point, film formation is completed in the first film formation unit 31a only. Namely, a film-formed substrate 71 (product) is obtained in film formation unit 31a.

After film formation in the first film formation unit 31a is completed as described above, control unit 23M selectively erases the first film formation conditions, which are the film formation conditions for the first film formation unit 31 a, from the second storage unit 21 (Fig. 2: step S5).

Referring to Figs. 3 and 7, film-formed substrate 71 is transported from the first film formation unit 31a to front chamber 33 via transport unit 32, as indicated by an arrow O1. Further, control unit 23M determines whether or not to repeat film formation by the first film formation unit 31a (Fig. 2: step S6). For example, if the number of film-formed substrates 71 does not reach a scheduled number set beforehand in control unit 23M, control unit 23M determines to repeat film formation, and if the number of film-formed substrates 71 reaches the scheduled number, control unit 23M determines not to repeat film formation.

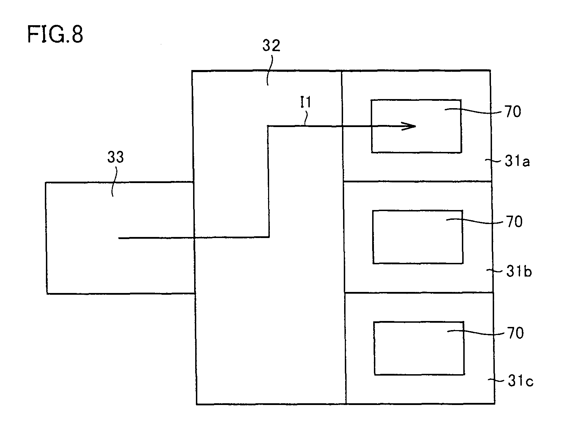

Referring to Figs. 3 and 8, if control unit 23M determines to repeat film formation in step S6, substrate 70 is transported from front chamber 33 to the first film formation unit 31a via transport unit 32 as indicated by arrow I1. Further, control unit 23M generates a signal requesting selective transmission of the first film formation conditions, which are the film formation conditions for the first film formation unit 31a of the first to third film formation conditions, from the first storage unit 11 to the second storage unit 21 (Fig. 2: step S2). This signal is transmitted to the first communication unit 12 via the second communication unit 22.

The first communication unit 12 that has received the above signal transmits the first formation conditions saved in the first storage unit 11 to the second communication unit 22. The second communication unit 22 receives the first film formation conditions transmitted from the first communication unit 12, and subsequently transmits the received first film formation conditions to the second storage unit 21 (Fig. 2: step S3).

Next, film formation by the first film formation unit 31a is repeated (Fig. 2: step S4).

After the above film formation in the first film formation unit 31a is completed, control unit 23M selectively erases the first film formation conditions, which are the film formation conditions for the first film formation unit 31 a, from the second storage unit 21 (Fig. 2: step S5). Then, control unit 23M determines again whether or not to repeat film formation by the first film formation unit 31a (Fig. 2: step S6).

If control unit 23M determines not to repeat film formation in step S6, repetition of film formation by the first film formation unit 31a is finished.

Further, in each of the second and third film formation units 31b and 31c, film formation is repeated a required number of times, as in the case of the first film formation unit 31a described above.

If repetition of film formation by each of the first to third film formation units 31a to 31c is finished, maintenance and inspection of film formation basic system 50M are performed (Fig. 2: step S7). During the maintenance and inspection, an operator stores conditions for the maintenance and inspection in the second storage unit 21 in processing area PA, and thereby the operator can operate film formation device 30M using control device 20M.

According to the present embodiment, an effect identical to that of Embodiment 1 can be obtained.

Further, since a specific one of the first to third film formation conditions used for the first to third film formation units 31a to 31c is selectively transmitted, film formation conditions suitable for each of the first to third film formation units 31a to 31c can be used.

Furthermore, since a specific one of the first to third film formation conditions used for the first to third film formation units 31a to 31c is selectively erased, the rest of the first to third film formation conditions being used for control can be prevented from being erased. This can avoid occurrence of a trouble in film formation due to erasure of the film formation conditions.

Although the film formation system has been described as the manufacturing system in the present embodiment, the present invention is not limited thereto, and the manufacturing system may be an etching system having an etching device.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### INDUSTRIAL APPLICABILITY

The present invention is particularly advantageously applicable to a manufacturing method and a manufacturing system for a product which use a storage unit storing manufacturing conditions.

### REFERENCE SIGNS LIST

10: saving device, 11: the first storage unit, 12: the first communication unit, 20, 20M: control device, 21: the second storage unit, 22: the second communication unit, 23, 23M: control unit, 30: manufacturing device, 30M: film formation device (manufacturing device), 31: processing unit, 31a to 31 c: the first to third film formation units (processing units), 32: transport unit, 33: front chamber, 50: basic system, 50M: film formation basic system, 70: substrate, 71: film-formed substrate (product), 100: manufacturing system, 100M: film formation system (manufacturing system), CA: controlled area (the first area), PA: processing area (the second area).

## Claims

1. A manufacturing method for a product (71), comprising the steps of:
saving manufacturing conditions in a first storage unit (11);
transmitting said manufacturing conditions from said first storage unit (11) to a second storage unit (21) to store said manufacturing conditions in said second storage unit (21);
manufacturing the product (71) based on said manufacturing conditions stored in said second storage unit (21); and
erasing said manufacturing conditions from said second storage unit (21) after the step of manufacturing said product (71).

2. The manufacturing method for the product (71) according to claim 1, wherein said second storage unit (21) is volatile.

3. The manufacturing method for the product (71) according to claim 1 or 2, wherein said first storage unit (11) is nonvolatile.

4. The manufacturing method for the product (71) according to any of claims 1 to 3, wherein said manufacturing conditions are not stored in a nonvolatile manner outside said first storage unit (11).

5. The manufacturing method for the product (71) according to any of claims 1 to 4, further comprising the step of generating a signal requesting transmission of said manufacturing conditions from said first storage unit (11) to said second storage unit (21) after the step of erasing said manufacturing conditions.

6. The manufacturing method for the product (71) according to claim 5, wherein
the step of manufacturing said product (71) is performed by each of a plurality of processing units (31a to 31c), and
said signal includes information specifying any of said plurality of processing units (31a to 31c).

7. A manufacturing system (100), comprising:
a manufacturing device (30) manufacturing a product (71);
a saving device (10) having a first storage unit (11) saving manufacturing conditions for controlling said manufacturing device (30), and capable of transmitting said manufacturing conditions saved in said first storage unit (11); and
a control device (20) having a second storage unit (21) storing said manufacturing conditions transmitted from said saving device (10), and a control unit (23) controlling said manufacturing device (30) based on said manufacturing conditions stored in said second storage unit (21),
wherein said control unit (23) is configured to erase said manufacturing conditions from said second storage unit (21) after controlling said manufacturing device (30) based on said manufacturing conditions stored in said second storage unit (21).

8. The manufacturing system (100) according to claim 7, wherein said saving device is installed in a first area, and said control device and said manufacturing device are installed in a second area different from said first area.

9. The manufacturing system (100) according to claim 8, wherein entry of people into said first area is restricted in terms of information management, when compared with said second area.

10. The manufacturing system (100) according to claims 7 to 9, wherein said second storage unit (21) is volatile.

11. The manufacturing system (100) according to claims 7 to 10, wherein said first storage unit (11) is nonvolatile.

12. The manufacturing system (100) according to any of claims 7 to 11, configured such that said manufacturing conditions are not stored in a nonvolatile manner outside said first storage unit (11).

13. The manufacturing system (100) according to any of claims 7 to 12, wherein said control unit (23) is configured to be capable of generating a signal requesting transmission of said manufacturing conditions from said first storage unit (11) to said second storage unit (21).

14. The manufacturing system (100M) according to claim 13, wherein
said manufacturing device (30M) includes a plurality of processing units (31a to 31c) each manufacturing said product (71), and
said signal includes information specifying any of said plurality of processing units (31a to 31c).
